# FASCICULE DE BREVET EUROPEEN

(11) **EP 0 583 190 B1**
(45) Date de publication et mention de la délivrance du brevet: **04.11.1998**
(21) Numéro de dépôt: 93401950.6
(22) Date de dépôt: 27.07.1993
(51) Int. Cl.: H04Q 3/00, H04Q 11/04, H04Q 3/545

(54) **Réseau de télécommunication réalisant séparément un traitement d'appel et un traitement de connexion**
Telekommunikationsnetz mit separater Anruf- und Verbindungsbehandlung
Telecommunications network with separate call and connection processing

(30) Priorité: 29.07.1992 FR 9209393
(43) Date de publication de la demande: 16.02.1994
(73) Titulaire: ALCATEL ALSTHOM COMPAGNIE GENERALE D'ELECTRICITE, 75008 Paris (FR)
(72) Inventeur: Vilain, Bernard, 22304 Lannion (FR)
(74) Mandataire: El Manouni, Josiane

(56) Documents cités:
- EP-A- 0 509 705
- EUROPEAN TRANSACTIONS ON TELECOMMUNICATIONS AND RELATED TECHNOLOGIES, vol. 1, no. 1 , Janvier 1990 , MILANO IT pages 17 - 30 M.BALLARD ET AL.
- INT. SWITCHING SYMPOSIUM 1990, SESSION C10, PAPER #5, vol. 6 , 28 Mai 1990 , STOCKHOLM, SE pages 187 - 193 M.GRENZHÄUSER ET AL.
- PROCEEDINGS OF THE NATIONAL COMMUNICATIONS FORUM vol. 44 , 8 Octobre 1990 , OAK BROOK, ILLINOIS US pages 601 - 608 M.GADDIS ET AL.
- ICIN 14 Mars 1989 , BORDEAUX, FR pages 99 - 107 R.KUNG

## Description

L'invention concerne un réseau de télécommunication réalisant séparément un traitement d'appel et un traitement de connexion.

Dans ce qui suit, on entend par traitement d'appel toutes les fonctions du réseau qui vont traiter les demandes de service émises par un abonné. Un traitement d'appel a donc une vision d'ensemble sur les ressources d'un noeud de commutation, qui seront nécessaires pour l'établissement d'un appel. On entend par traitement de connexion toutes les fonctions nécessaires à la mise en oeuvre des connexions : l'établissement, la supervision, et le relâchement des connexions constituant le support d'un appel. Le traitement de connexion comprend donc les fonctions de commutation proprement dites et les fonctions d'acheminement.

Un modèle fonctionnel pour le réseau numérique à intégration de services (RNIS) à bande étroite, est connu. Selon ce modèle, le traitement d'appel et le traitement de connexion ne sont pas séparés : l'établissement d'un appel implique la commande des connexions nécessaires, en même temps que la commande de l'appel. D'autre part, un modèle fonctionnel a été développé pour un premier ensemble de services du réseau intelligent. Ce modèle ne remet pas en cause le modèle fonctionnel du RNIS à bande étroite, mais il greffe sur celui-ci un modèle de commande de service permettant d'asservir le modèle du RNIS à bande étroite, pendant certaines phases particulières d'un appel.

Le document European Transactions on Telecommunications and related Technologies, vol.1, n°1, Janvier 1990, Milano, IT, pages 17-30, M. BALLARD et al, décrit les principes d'un réseau intelligent séparant un traitement de service et un traitement d'appel, et décrit ses avantages. Le traitement d'appel inclut le traitement de connexion. Ce réseau intelligent est utilisé pour réaliser un centre de commutation d'un service radio mobile. Le document International Switching Symposium 1990, Session C10, Paper n°5, vol.6, 28 Mai 1990, Stockholm, SE, pages 187-193, M. GREENHHAUSER et al, décrit plus en détail une application du réseau intelligent pour réaliser un réseau de radiotéléphonie .

Un modèle fonctionnel greffé sur le modèle fonctionnel du RNIS à bande étroite, est mise en oeuvre par exemple dans le réseau de radiotéléphonie qui est décrit dans la demande de brevet français N° 2 638 307. Dans ce réseau, un centre de commutation comporte un commutateur d'accès au service assurant uniquement des fonctions de commutation concernant la parole et les données ; et comporte un point de contrôle radio mobile assurant uniquement des fonctions de signalisation concernant la mobilité des abonnés radio mobiles. Le traitement d'appel des abonnés radio mobiles est donc réalisé dans le commutateur, ce dernier étant un commutateur classique qui est partiellement utilisé aussi pour rattacher des terminaux d'abonnés fixes.

Un modèle fonctionnel pour des services simples à large bande a été développé. Ce modèle s'appuie sur le principe de la séparation du traitement d'appel et du traitement de connexion. De ce fait, il diffère fondamentalement du modèle fonctionnel du réseau intelligent greffé sur le modèle fonctionnel du RNIS à bande étroite. La notion d'appel multimédia oblige en effet, à distinguer le traitement d'appel et le traitement de connexion car l'établissement d'un appel peut être suivi de l'établissement de plusieurs connexions qui peuvent varier au cours d'un même appel. Par exemple, un appel à large bande peut avoir pour support une connexion unidirectionnelle, puis une connexion bidirectionnelle, ou bien peut changer de bande passante selon les services demandés au cours d'un même appel.

Le modèle fonctionnel du réseau à large bande pour des services simples reste insuffisant pour des appels multiparticipants ou pour décrire le traitement de services évolués tels que les services multimédia.

Le but de l'invention est de proposer un réseau de télécommunication permettant de supporter des services évolués, notamment des services évolués à large bande.

L'objet de l'invention est un réseau de télécommunication réalisant séparément un traitement d'appel et un traitement de connexion, caractérisé en ce qu'il comporte des noeuds de commutation comportant chacun :
- un point de commande d'appel et de service assurant toutes les fonctions de la signalisation relative au traitement d'appel et au traitement de service notamment : établissement, supervision, libération d'un appel et d'au moins un service demandé au cours de cet appel ;
- au moins un point de commande de support couplé au point de commande d'appel et de service, et assurant uniquement des fonctions de commutation et des fonctions de signalisation relatives au traitement de connexion notamment: établissement, supervision, puis libération d'un support.

L'invention sera mieux comprise et d'autres détails apparaîtront à l'aide de la description ci-dessous et des figures l'accompagnant :
- la figure 1 représente le modèle fonctionnel connu pour un réseau à large bande pour des services simples ;
- la figure 2 représente le modèle fonctionnel connu pour un réseau intelligent greffé sur un RNIS à bande étroite ;
- la figure 3 représente le modèle fonctionnel d'un réseau selon l'invention ;
- la figure 4 représente le schéma synoptique d'un exemple de réalisation d'un noeud de commutation du réseau selon l'invention.

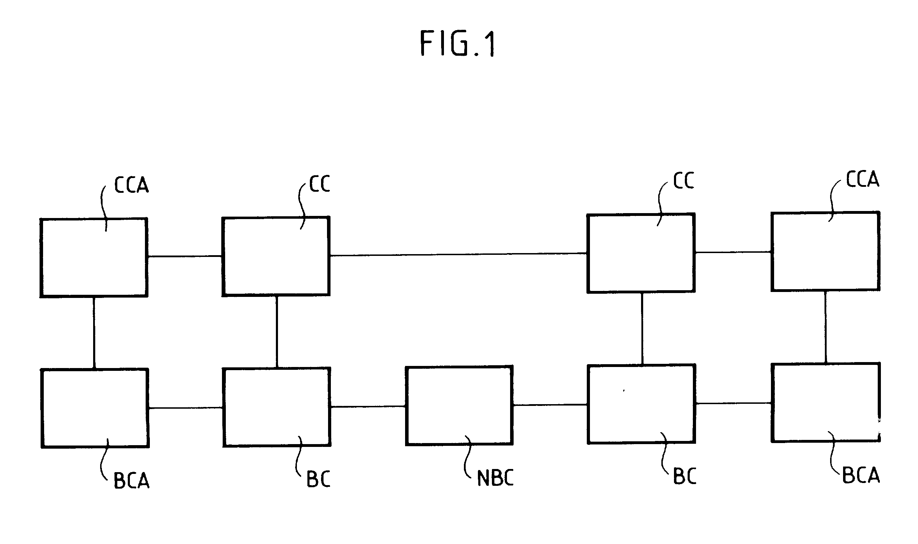

Sur la figure 1, le modèle fonctionnel connu d'un réseau à large bande, pour services simples, comporte une couche supérieure appelée couche de traitement d'appel et une couche inférieure appelée couche de traitement de connexion. La couche de traitement de connexion comporte :
- dans l'équipement d'abonné, un bloc fonctionnel BCA, agent de commande de support ;
- dans chaque noeud de rattachement d'abonné, un bloc fonctionnel BC, commande de support ;
- dans des noeuds intermédiaires du réseau, des blocs fonctionnels NBC, commandes de support réseau, assurant la fonction de transit.

Cette couche de traitement de connexion remplit les fonctions : d'établissement de canaux virtuels ou de chemins de connexion ; de gestion des ressources de connexion ; de commande d'acheminement des connexions (canaux virtuels, ou chemins de connexion) ; de supervision de l'utilisation et de l'encombrement des connexions ; et de transfert de la signalisation provenant de la couche de traitement d'appel.

La couche de traitement d'appel comporte :
- Dans l'équipement d'abonné, un bloc fonctionnel CCA agent de commande d'appel ;
- dans chaque noeud de rattachement d'abonné, ou intermédiaire, un bloc fonctionnel CC de commande d'appel.

La couche de traitement d'appel assure le traitement global de l'appel, incluant : l'établissement et le relâchement d'un appel ; des services supplémentaires ; et l'acheminement d'un appel. De plus, elle assure la commande des canaux virtuels, notamment : l'autorisation donnée à la couche de traitement de connexion pour l'établissement et le relâchement de canaux virtuels ; la corrélation entre un appel et un ou plusieurs canaux virtuels ; la gestion des états d'appel associés aux appels ; le transfert de signalisation, notamment pour les services supplémentaires ; et la signalisation d'usager à usager.

Ce modèle n'est pas totalement finalisé à ce jour, et d'autre part il reste insuffisant pour des appels multiparticipants ou pour décrire le traitement de services évolués.

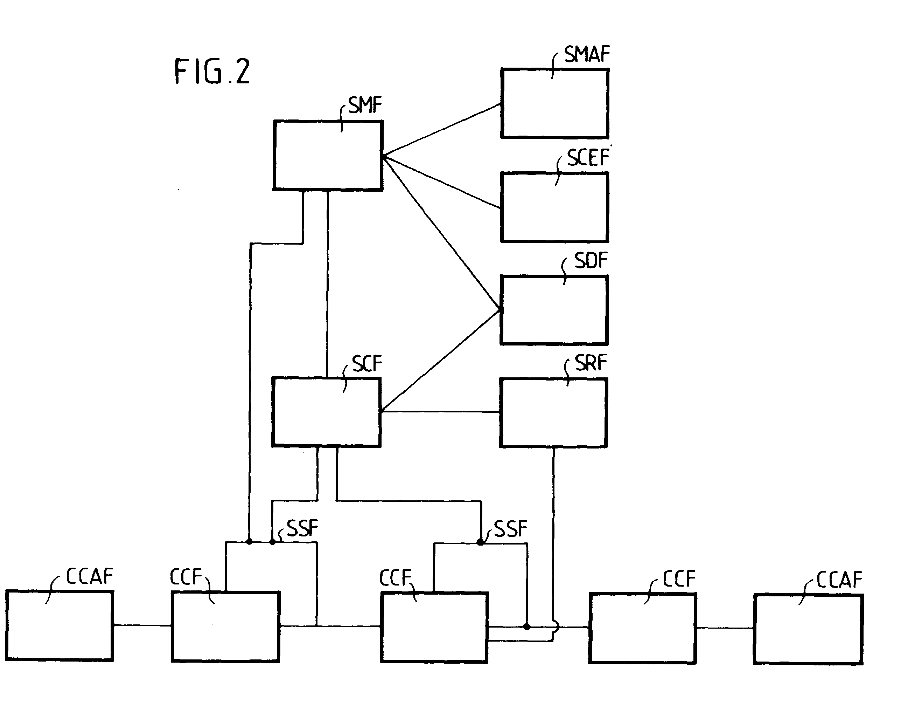

La figure 2 représente le modèle fonctionnel connu pour un réseau intelligent greffé sur un réseau à intégration de services, à bande étroite. Ce modèle comporte une couche inférieure dont les fonctions sont celles du traitement d'appel classique d'un RNIS à bande étroite ; et une couche supérieure qui permet de commander la mise en oeuvre de services, et de gérer ces services.

La couche supérieure comporte des blocs fonctionnels communs pour l'ensemble du réseau et assurant sa gestion : un bloc SMF, fonctions de gestion de service ; un bloc SMAF, fonctions d'accès à la gestion de service ; et un bloc SCEF, fonctions d'environnement de création de service ; un bloc SCF, fonctions de traitement de service, qui est enrichi par un bloc SRF, fonctions de ressources spécialisées et un bloc SDF, fonctions de données de service.

Chaque équipement d'abonné comprend un bloc fonctionnel CCAF, fonction d'accès au traitement d'appel, qui est une interface entre l'abonné et les fonctions de traitement d'appel du réseau. Il remplit les fonctions suivantes :
- il fournit à l'abonné : un accès, un maintien, une modification, et un relâchement pour un appel ou une instance de service ;
- il accède aux capacités de service de la fonction de traitement d'appel, CCF d'un noeud, en utilisant des demandes de service, pour : l'établissement, la manipulation, et le relâchement d'un appel ou d'une instance de service ;
- il reçoit des indications relatives à un appel ou à un service en provenance d'un bloc fonctionnel CCF d'un noeud, et les ré-émet vers l'abonné ;
- il met à jour des informations d'état d'une demande de service.

Chaque noeud du réseau comporte un bloc fonctionnel CCF, fonction traitement d'appel, qui assure les fonctions suivantes :
- il établit, manipule et relâche les instances d'appel ou de connexion, à la demande du bloc fonctionnel CCAF ;
- il permet d'associer et de relier des entités fonctionnelles du bloc CCAF qui sont impliquées dans un appel particulier ou une instance de connexion ;
- il gère les relations entre des entités fonctionnelles du bloc CCAF impliquées dans un appel ;
- il fournit des mécanismes de déclenchement pour accéder aux fonctions du réseau intelligent, par exemple transmet des évènements à un bloc SSF, serveur de fonctions de commutation d'un noeud ;
- il est géré, et mis à jour en ce qui concerne ses fonctions en relation avec le réseau intelligent, par le bloc fonctionnel SMF, fonctions de gestion de service.

Chaque noeud comporte un bloc fonctionnel SSF, serveur de fonctions de commutation, qui, en association avec le bloc CCF, procure les fonctions nécessaires aux interactions entre les blocs CCF et SCF. Ces fonctions sont les suivantes:
- reconnaissance d'évènements déclenchant la commande de service, pour interagir avec le bloc fonctions de traitement de service, SCF ;
- gestion de la signalisation entre le bloc CCF et le bloc SCF;
- modification des fonctions de traitement de connexion, dans le bloc CCF, de la manière requise pour traiter les demandes de service sous le contrôle du bloc SCF.

Le bloc SSF est géré, et mis à jour, par le bloc SMF.

Le bloc SCF, fonctions de traitement de service. commande les fonctions de traitement d'appel : il peut interagir avec d'autres blocs fonctionnels pour obtenir des informations nécessaires pour traiter un appel ou un service. Ces fonctions sont les suivantes :
- il interagit avec les blocs SSF, SRF, et SDF ;
- il contient la logique et les capacités de traitement nécessaires pour les services rendus par le réseau intelligent ;
- il interagit avec d'autres blocs SCF si nécessaire ;
- il est géré et mis à jour par le bloc SMF, fonctions de gestion de service.

Le bloc fonctionnel SDF, fonctions de données de service, contient des données du réseau et des abonnés, accessibles en temps réel par les blocs SCF pour l'exécution de services du réseau intelligent. Ces fonctions sont les suivantes :
- il interagit avec le bloc SCF ;
- il est géré et mis à jour par le bloc SMF, fonctions de gestion de service.

Le bloc SRF, fonctions de ressources spécialisées, fournit des ressources spécialisées nécessaires pour l'exécution de certains services du réseau intelligent, par exemple : des récepteurs de chiffres, des annonces, des ponts de conférence, etc. Ces fonctions sont les suivantes :
- il interagit avec les blocs SCF, et CCF ;
- il est géré et mis à jour par le bloc SMF, fonctions de gestion de service ;
- il peut contenir une logique et une capacité de traitement pour recevoir et émettre des informations en provenance des abonnés ;
- il peut assurer une fonction similaire à celle du bloc CCF, fonctions de traitement d'appel, pour gérer des connexions supports pour des ressources spécialisées.

Le bloc fonctionnel SCEF, fonctions d'environnement de création de service, permet de définir, développer, tester, et rentrer dans le bloc SMF, de nouveaux services.

Le bloc SMAF, fonctions d'accès à la gestion de service, fournit une interface entre des gestionnaires du service et le bloc SMF, fonctions de gestion de service.

Le bloc fonctionnel SMF permet le déploiement et la fourniture des services du réseau intelligent. Pour un service donné, il permet de coordonner différentes instances des blocs fonctionnels SCF et SDF.

On peut remarquer une différence d'approche entre le modèle fonctionnel du réseau intelligent et le modèle fonctionnel du réseau à large bande. Le premier modélise une relation verticale entre couches SSF et SCF, qui a conduit à la spécification d'une interface de réseau intelligent entre ces deux couches. Le second, au contraire, a privilégié les relations entre entités homologues au sens traditionnel des protocoles : c'est une relation horizontale entre les blocs CCA et CC de la couche de traitement d'appel d'une part, et une relation horizontale entre les blocs BCA, BC, NBC, de la couche traitement de connexion, d'autre part.

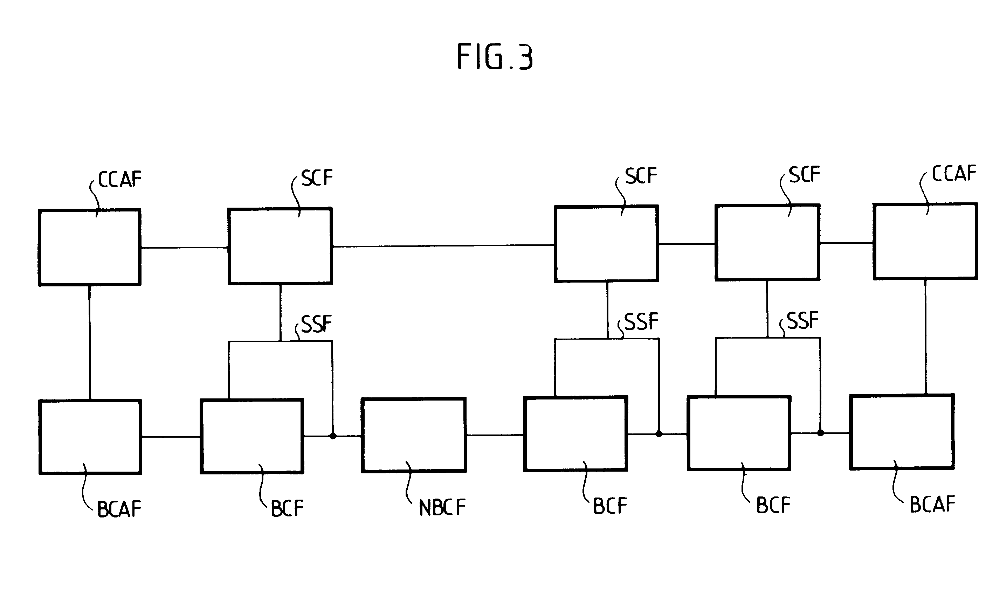

La figure 3 représente le modèle fonctionnel du réseau de télécommunication selon l'invention. Dans la couche supérieure, dite de traitement d'appel, chaque équipement d'usager comporte un bloc CCAF, fonctions d'accès au traitement d'appel ; et chaque noeud comporte un bloc SCF, fonctions de traitement de service. Dans la couche inférieure, dite de traitement de connexion, chaque équipement d'usager comporte un bloc BCAF, fonctions d'agent de commande de support ; et chaque noeud de rattachement d'abonnés comporte un bloc BCF, fonctions de commande de support, sur lequel est greffé un bloc SSF serveur de fonctions de commutation. Les noeuds intermédiaires comportent, un bloc fonctionnel NBCF, fonctions de commande de support de réseau, pour assurer le transit.

Le bloc CCAF, fonctions d'accès au traitement d'appel, remplit les fonctions décrites précédemment pour le bloc CCA en référence à la figure 1. Le bloc BCAF remplit les fonctions suivantes :
- il gère des ressources pour les éléments de connexion support, du côté accès des abonnés au réseau, en coopération avec les blocs fonctionnels BCF adjacents, à la demande des blocs fonctionnels CCAF ;
- il connecte et déconnecte les ressources de support, du côté accès ;
- il gère la configuration des ressources, du côté accès.

Le bloc fonctionnel NBCF, fonctions de commande de support de réseau, remplit les fonctions suivantes :
- il gère des ressources de support, du côté réseau, en coopération avec les blocs fonctionnels BCF, fonctions de commande de support ;
- il relaie des connexions de support de réseau, en coopération avec les blocs adjacents BCF ;
- il gère la configuration des ressources, du côté réseau.

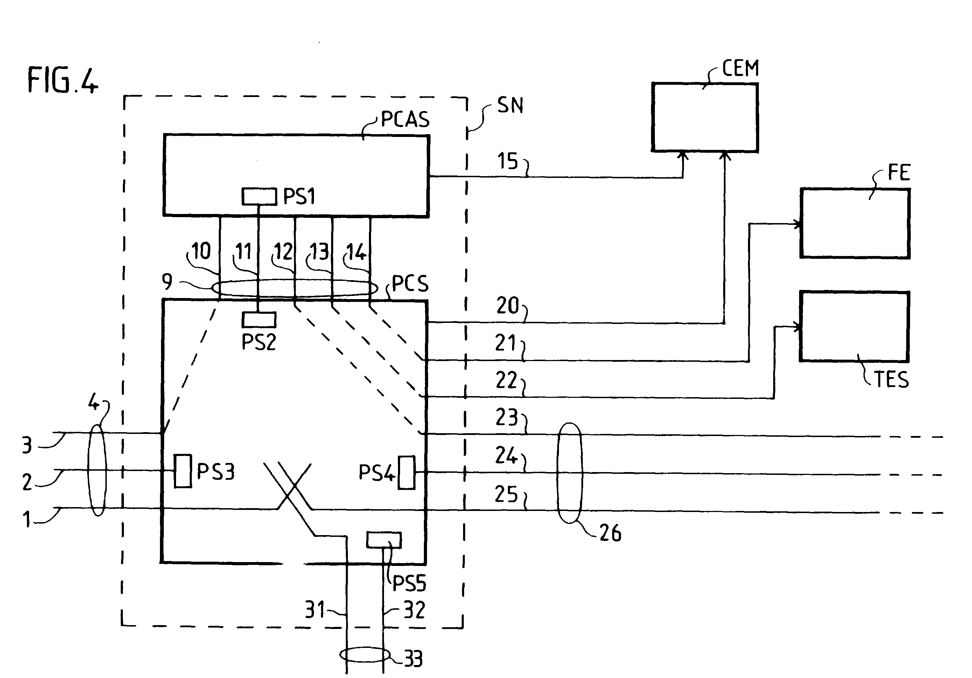

La figure 4 représente le schéma synoptique d'un exemple de réalisation d'un noeud de commutation SN du réseau de télécommunication selon l'invention, constituant un centre de rattachement d'abonnés ou un centre de transit. Il comporte un point de commande d'appel et de service, PCAS, et un commutateur appelé point de commande de support, PCS. Ces deux entités fonctionnelles peuvent être situées physiquement en un même lieu ou en deux lieux distincts. Le point de commande de support, PCS, remplit les fonctions du bloc fonctionnel BC décrit précédemment en référence à la figure 1. Il fournit un ensemble de moyens physiques ou logiques correspondant aux niveaux 1 à 3 du modèle fonctionnel ISO. Il peut fournir n'importe quel type de support, notamment des circuits virtuels fonctionnant suivant le mode de fonctionnement asynchrone.

Le point de commande d'appel et de service, PCAS, remplit les fonctions du bloc fonctionnel SCF décrit précédemment en référence à la figure 2 et celles du bloc fonctionnel CC en référence à la figure 1. Il assure uniquement la signalisation relative au traitement d'appel et de service, notamment : établissement, supervision, puis libération d'un appel, et d'un service ou des services utilisés pendant cet appel.

L'établissement d'un appel consiste en : une analyse des informations contenues dans une demande de service émise par un demandeur, sous la forme de numéros ou de caractères alphanumériques, ou sous la forme d'une simple information désignant une catégorie d'abonnés, par exemple ligne sans numérotation; une traduction éventuelle en un autre numéro, pour le service appelé libre appel, par exemple ; une détermination d'un numéro d'acheminement définissant une direction géographique ; et une détermination de données de taxation.

La supervision d'un appel consiste à détecter des évènements issus du demandeur ou du demandé, ou de l'état technique du réseau, et pouvant conduire à un changement d'état logique de l'appel, par exemple une demande de service supplémentaire ou une demande de cessation de service, ou la défaillance d'un multiplex support de l'appel.

Le point de commande de support, PCS, assure les fonctions des blocs SSF et BCF décrits précédemment en référence à la figure 3, c'est-à-dire uniquement des fonctions de commutation et de signalisation relatives à la commande du support, notamment : établissement, supervision, et libération du support, en fonction des informations fournies par le point de commande d'appel et de service, PCAS ; ou fournies par les points de commande de support homologues.

Le point de commande de support PCS est relié, par un multiplex 4, à un abonné ou à un autre noeud du réseau de télécommunication. Le multiplex 4 comporte:
- une liaison 1 de parole ou de données;
- une liaison 2 de signalisation de traitement de support et une liaison 3 de signalisation de traitement d'appel du type signalisation d'abonné ou du type signalisation CCITT n° 7, selon le cas.

Le point de commande de support PCS est relié par un multiplex 26, à un autre noeud du réseau de télécommunication. Le multiplex 26 comporte:
- une liaison 25 de parole et de données;
- une liaison 24 de signalisation de traitement de support, et une liaison 23 de signalisation de traitement d'appel, ces deux signalisations étant du type CCITT n° 7.

Les liaisons 1 et 25 sont reliées par une connexion temporaire établie par le point de commande de support PCS. Les liaisons 2 et 24 aboutissent à des points de signalisation PS3 et PS4 du point de commande PCS.

Le point de commande d'appel et de service, PCAS, est relié au point de commande de support, PCS, par un multiplex 9 comportant:
- une liaison 10 de signalisation de traitement d'appel, reliée à la liaison 3 par une connexion semi-permanente établie par le point de commande de support, PCS;
- une liaison 11 de signalisation de télécommande de support, reliant des points de signalisation PS1 ET PS2 situés respectivement dans le point de commande d'appel et de service PCAS, et dans le point de commande de support PCS;
- une liaison 12 de signalisation de traitement d'appel, reliée à la liaison 23 par une connexion semi-permanente établie par le point de commande de support PCS ;
- une liaison 13 de signalisation de traitement externe de service, reliée à la liaison 22 par une connexion semi-permanente établie par le point de commande de support PCS ;
- une liaison 14 de signalisation de fichier externe, reliée à la liaison 21 par une connexion semi-permanente établie par le point de commande de support PCS.

Les points de signalisation PS1 et PS2 utilisent l'interface normalisée de réseau intelligent, enrichie par des paramètres relatifs aux connexions demandées par le PCAS: connexion monodirectionnelle, bidirectionnelle, symétrique, asymétrique, diffusion point à point, bande passante, ou toute combinaison licite des précédentes caractéristiques.

Par ailleurs, les points de commande PCAS et respectivement PCS sont reliés, par des liaisons 15 et 20 à un centre national d'exploitation et de maintenance CEM assurant les fonctions d'exploitation et de maintenance concernant les appels et les services, notamment la taxation, respectivement les ressources physiques mises en jeu pour des supports. La séparation des deux types de flux d'informations offre d'emblée la possibilité de les exploiter selon la hiérarchie déjà normalisée pour les réseaux d'exploitation et de maintenance (recommandation M.30 annexe A, du CCITT). Le point de commande de support PCS est relié en outre par:+
- une liaison 22 à un traitement externe de service, TES, externe au noeud SN;
- une liaison 21 à des fichiers FE externes au noeud SN.

Pour interfonctionner avec un réseau numérique à intégration de services (RNIS), le point de commande de support, PCS, est relié à celui-ci par un multiplex 33 comportant :
- une liaison 31 de parole et de données, qui peut être connectée temporairement aux liaisons 1, 25 ;
- et une liaison 32 de signalisation de traitement d'appel et de support, de type SSUR CCITT n°7, aboutissant à un point de signalisation PS5 du point de commande de support PCS.

Le point de commande de support PCS dispose alors d'une interface de réseau numérique à intégration de service, lui permettant d'accéder à des services classiques d'un réseau intelligent ou d'un réseau radio mobile, tels que ceux décrits dans la demande de brevet français n° 2 638 307. Cette interface permet de réaliser un réseau mixte RNIS/réseau à séparation du traitement d'appel et du traitement de support, permettant une évolution progressive des réseaux déjà installés.

Le point de commande de support PCS sert d'accès à des services qui peuvent être traités: soit au niveau local/régional par le point de commande d'appel et de service PCAS; soit au niveau national par un traitement externe de service, TES. Ces services utilisent des données qui sont stockées dans des fichiers qui sont: soit locaux/régionaux, et internes au point de commande d'appel et de service PCAS; soit nationaux, dans des fichiers externes FE. D'autre part, ces fichiers peuvent être: soit permanents; soit temporaires.

Par exemple, un service de traduction des numéros d'urgence (15, 17, 18 en France) est traité au niveau local ou régional, par PCAS, et il utilise des fichiers locaux situés dans PCAS. Par contre, un service de radiotéléphonie est traité au niveau local/régional par PCAS, mais en utilisant des données permanentes et des données temporaires, concernant les abonnés, centralisées au niveau national dans des fichiers externes FE. Dans ce dernier cas, l'interface entre PCAS et les fichiers externes FE est de type IN ou MAP, c'est-à-dire comporte un jeu d'opérations construit au-dessus de protocoles transactionnels tel que le protocole TCAP normalisé par le CCITT.

Selon une variante de réalisation, un point de commande d'appel et de service, PCAS, peut être couplé à plusieurs points de commande de support, PCS.

## Revendications

1. Réseau de télécommunication réalisant séparément un traitement d'appel et un traitement de connexion, caractérisé en ce qu'il comporte des noeuds de commutation comportant chacun :
- un point de commande d'appel et de service (PCAS) assurant toutes les fonctions de la signalisation relative au traitement d'appel et au traitement de service notamment : établissement, supervision, libération d'un appel et d'au moins un service demandé au cours de cet appel ;
- au moins un point de commande de support (PCS) couplé au point de commande d'appel et de service (PCAS), et assurant uniquement des fonctions de commutation et des fonctions de signalisation relatives au traitement de connexion notamment : établissement, supervision, puis libération d'un support.

2. Réseau selon la revendication 1, caractérisé en ce que le point de commande de support (PCS) est couplé au point de commande d'appel et de service (PCAS), par une liaison utilisant l'interface normalisée de réseau intelligent, enrichie par des paramètres relatifs aux connexions demandées par le point de commande d'appel et de service (PCAS).

3. Réseau selon la revendication 1, caractérisé en ce qu'un point de commande d'appel et de service (PCAS) est couplé à plusieurs points de commande de support (PCS).

4. Réseau selon la revendication 1, caractérisé en ce que le point de commande d'appel et de service (PCAS), respectivement le point de commande de support (PCS), est relié à un centre d'exploitation et de maintenance (CEM) relatif aux fonctions d'exploitation et de maintenance concernant les appels et les services, notamment la taxation, respectivement les ressources mises en jeu pour des supports.

5. Réseau selon la revendication 1, caractérisé en ce qu'un noeud de commutation (SN) comporte une interface (PS5) vers un réseau numérique à intégration de services pour réaliser un réseau mixte : réseau numérique à intégration de services/réseau réalisant séparément un traitement d'appel et un traitement de connexion.

## Patentansprüche

1. Telekommunikationsnetz, das eine getrennte Anruf- und Verbindungsverarbeitung durchführt, dadurch gekennzeichnet, daß es Vermittlungsknoten umfaßt, die jeweils umfassen:
- einen Anruf- und Dienststeuerpunkt (PCAS), der alle die Anrufverarbeitung und die Dienstverarbeitung betreffenden Signalisierungsfunktionen wahrnimmt, insbesondere: Etablierung, Überwachung, Freigabe eines Anrufs und wenigstens eines im Laufe dieses Anrufs angeforderten Dienstes;
- wenigstens einen Trägersteuerpunkt (PCS), der an den Anruf- und Dienststeuerpunkt (PCAS) gekoppelt ist und ausschließlich Vermittlungsfunktionen und Signalisierungsfunktionen wahrnimmt, die die Verbindungsverarbeitung betreffen, insbesondere: Etablierung, Überwachung und dann Freigabe eines Trägers.

2. Netz nach Anspruch 1, dadurch gekennzeichnet, daß der Trägersteuerpunkt (PCS) an den Anruf- und Dienststeuerpunkt (PCAS) durch eine Verbindung gekoppelt ist, die die normierte Schnittstelle des intelligenten Netzes verwendet, angereichert durch Parameter betreffend die vom Anruf- und Dienststeuerpunkt (PCAS) angeforderten Verbindungen.

3. Netz nach Anspruch 1, dadurch gekennzeichnet, daß ein Anruf- und Dienststeuerpunkt (PCAS) an mehrere Trägersteuerpunkte (PCS) gekoppelt ist.

4. Netz nach Anspruch 1, dadurch gekennzeichnet, daß der Anruf- und Dienststeuerpunkt (PCAS) bzw. der Trägersteuerpunkt (PCS) verbunden ist mit einem Betriebs- und Wartungszentrum (CEM) bezüglich der die Anrufe und Dienste betreffenden Betriebs- und Wartungsfunktionen, insbesondere der Gebührenberechnung bzw. der für die Träger eingesetzten Ressourcen.

5. Netz nach Anspruch 1, dadurch gekennzeichnet, daß ein Vermittlungsknoten (SN) eine Schnittstelle (PS5) zu einem ISDN-Netz umfaßt, um ein gemischtes Netz: ISDN-Netz/Netz mit getrennter Anrufverarbeitung und Verbindungsverarbeitung zu bilden.

## Claims

1. Telecommunication network in which call control and connection control are separated, characterised in that it comprises switching nodes each comprising:
- a call and service control point (PCAS) implementing all signalling functions relating to call control and service control including: call set-up, supervision and clearing down and the same functions in respect of at least one service requested during said call; and
- at least one bearer control point (PCS) connected to said call and service control point (PCAS) and implementing only switching functions and signalling functions relating to connection control including: bearer set-up, supervision and clearing down.

2. Network according to claim 1 characterised in that the bearer control point (PCS) is connected to said call and service control point (PCAS) by a link using the standard intelligent network interface enriched by parameters relating to connections requested by the call and service control point (PCAS).

3. Network according to claim 1 characterised in that a call and service control point (PCAS) is connected to a plurality of bearer control points (PCS).

4. Network according to claim 1 characterised in that the call and service control point (PCAS) and the bearer control point (PCS) are respectively connected to an operation and maintenance centre (CEM) in respect of operation and maintenance functions concerning calls and services including charging and to bearer resources deployed.

5. Network according to claim 1 characterised in that a switching node (SN) comprises an interface (PS5) to an integrated services digital network to provide a hybrid network: integrated services digital network/network with separate call control and connection control.
